# EUROPÄISCHE PATENTSCHRIFT

(11) **EP 1 669 288 B1**
(45) Veröffentlichungstag und Bekanntmachung des Hinweises auf die Patenterteilung: **07.05.2008**
(21) Anmeldenummer: 05026590.9
(22) Anmeldetag: 06.12.2005
(51) Int. Cl.: B64C 3/18, B64C 3/26, B64F 5/00

(54) **Flugzeugflügel, Verfahren zum Herstellen eines Flugzeugflügels und Verwendung eines Schweissverfahrens zum Verschweissen eines Flügelholms**
Aircraft wing, method of manufacturing an aircraft wing and use of a welding method for welding a wing spar
Aile d'aéronef, procédé de fabrication d'une aile d'aéronef et utilisation d'un procédé de soudage pour souder un longeron d'aile

(30) Priorität: 07.12.2004 DE 102004058910; 07.12.2004 US 633958 P
(43) Veröffentlichungstag der Anmeldung: 14.06.2006
(73) Patentinhaber: Airbus Deutschland GmbH, 21129 Hamburg (DE)
(72) Erfinder: Schmidt, Hans-Jürgen, 21614 Buxtehude (DE); Telgkamp, Jens, 21614 Buxtehude (DE)
(74) Vertreter: Maiwald Patentanwalts GmbH

(56) Entgegenhaltungen:
- GB-A- 461 356
- GB-A- 543 430
- US-A1- 2001 052 561

## Beschreibung

Die Erfindung betrifft einen Flugzeugflügel, ein Verfahren zum Herstellen eines Flugzeugflügels und eine Verwendung eines Schweißverfahrens zum Verschweißen eines Flügelholms.

Ein Flügel eines Flugzeugs enthält üblicherweise eine Flügelunterdecke, eine Flügeloberdecke und mindestens einen Flügelholm, der die Flügelunterdecke mit der Flügeloberdecke überbrückt. Ein solcher Flügelholm ist häufig aus einem Obergurt und einem Untergurt sowie einem Mittelsteg dazwischen gebildet. Ein solcher Holm ist an der Obergurtseite mit der Flügeloberdecke und an der Untergurtseite mit der Flügelunterdecke verbunden.

Beim Konstruieren des Schnittstellenbereiches zwischen Flügelholm und Flügeldecken ist eine Vielzahl von Auslegungskriterien zu berücksichtigen, wie zum Beispiel die statische Festigkeit, das Deformationsverhalten, die Stabilität, Eigenschaften der Riss-Initiierung und des Risswachstums, die Restfestigkeit, die Korrosionsbeständigkeit, die Inspizierbarkeit und verschiedenste Fertigungsaspekte.

Aus US 2001/0052561 ist ein Verfahren zum Bilden einer strukturellen Flugwerkkomponente für ein Flugzeug bekannt. Dabei werden mindestens zwei Komponenten in eine angrenzende Beziehung gebracht und mittels eines Reib-Rühr-Schweiß-Verfahrens verbunden.

GB 543 430 offenbart einen Flügel, der aus einer Anzahl von Abschnitten entlang seiner Länge gebildet wird. Dabei hängt die Länge eines solchen Abschnitts von der Kapazität einer verfügbaren Presse ab.

Aus GB 461 356 ist ein Verfahren zum Zusammensetzen von Metallteilen für ein Metallflugzeug bekannt. Dabei werden die Metallteile entweder mittels Hartlöten, Löten, Ofenlöten oder Schweißen verbunden.

Herkömmlich ist ein Flügelholm mit den Flügeldecken mittels einreihiger bis dreireihiger Nietungen oder mittels Verschraubungen verbunden. Auch ist aus dem Stand der Technik bekannt, einen Flügelholm mit Flügeldecken unter Verwendung einer Klebeverbindung zu befestigen. Die Flügeldecken beginnen vor einem Vorderholmanschluss zur Aufnahme einer Flügelnase und enden hinter einem Hinterholmanschluss mit der Ausbildung des Flügelendkastens zur Befestigung der Flügelklappen.

Flügeldecken und Flügelholme weisen zahlreiche Dickenabstufungen zur Erreichung eines minimalen Gewichts auf bei gleichzeitiger Erfüllung von komplexen Festigkeitsanforderungen und Wartbarkeitsanforderungen wie der Inspizierbarkeit bzw. der Reparierbarkeit. Insbesondere bei großen Transportflugzeugen sind die Holme häufig aus einem Aluminiumrohling integral gefräst, wohingegen bei kleineren Flugzeugen die Holme oft in Differentialbauweise gefertigt sind.

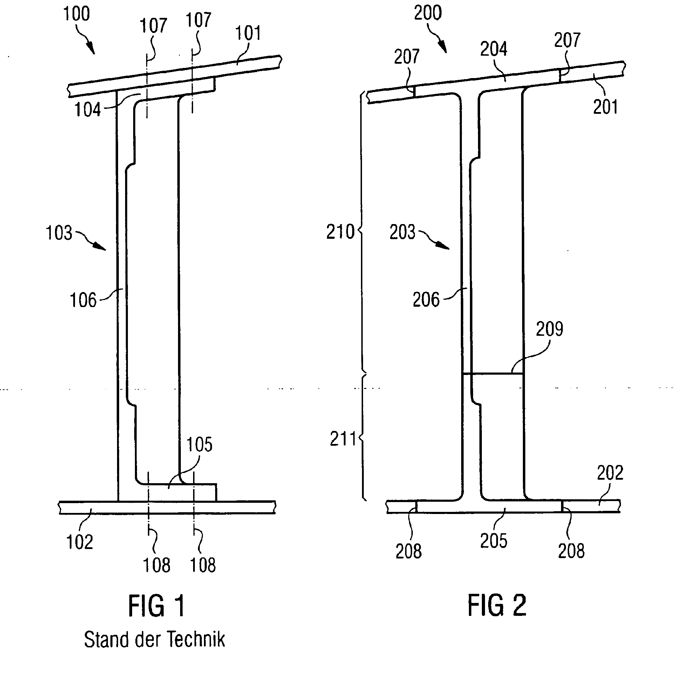

Im Weiteren wird bezugnehmend auf **Fig. 1** ein Flugzeugflügel 100 gemäß dem Stand der Technik beschrieben.

Der Flugzeugflügel 100 enthält eine Flügeloberdecke 101 und eine Flügelunterdecke 102, wobei die Flügeloberdecke 101 gegenüber der Flügelunterdecke 102 mittels eines Flügelholms 103 überbrückt ist. Der Flügelholm 103 enthält einen Obergurt 104, einen Untergurt 105 und einen dazwischen angeordneten Mittelsteg 106. Der Obergurt 104 ist mittels einer Schraubverbindung 107 mit der Flügeloberdecke 101 verbunden. Der Untergurt 105 ist mittels einer anderen Schraubverbindung 108 mit der Flügelunterdecke 102 verbunden. Bei dem Flügelholm 103 handelt es sich um einen Flügelholm mit Rippenanschluss. Alternativ zu der Verschraubung 107, 108 kann auch eine Vernietungsverbindung vorgesehen sein.

Die aus dem Stand der Technik bekannte Verbindungstechnik zum Verbinden von Flügelholm mit Flügeldecken weist erhebliche Nachteile auf. Eine geringe Anrisslebensdauer resultiert aus einer hohen Lastübertragung von den Holmgurten in die Flügeldecken bei einer Flügelbiegung oder einer Flügeltorsion. Die einreihigen bis dreireihigen Nietungen oder Verschraubungen, die in Spannweitenrichtung verlaufen, erzeugen hohe Fertigungskosten, die durch notwendige lebensdauersteigernde Maßnahmen (zum Beispiel plastisches Aufweiten der Bohrungen vor dem Einsetzen der Verbindungselemente) noch zusätzlich erhöht werden.

Häufig sind die Gurte der Holme die Bauteile mit der geringsten Lebensdauer, wobei mögliche Risse in der Regel senkrecht zur Holmrichtung wachsen. Das Auffinden dieser Risskonfiguration durch externe visuelle Inspektionen ist häufig unmöglich, so dass interne kostenintensive Flügelinspektionen für eine rechtzeitige Entdeckung von Beschädigungen erforderlich sind. Nach einem Bruch des Holmgurts können die geforderten Auslegungslasten (sichere Lasten) vielfach nicht mehr übertragen werden.

Die genietete oder verschraubte Verbindung zwischen Flügelholm und Flügeldecken erfordert eine Dopplung mit daraus resultierenden Gewichtsnachteilen.

Der Erfindung liegt das Problem zugrunde, eine Verbindung zwischen Flügelholm und Flügeldecken bereitzustellen, die eine hohe mechanische Stabilität aufweist und kostengünstig herstellbar ist.

Dieses Problem wird durch einen Flugzeugflügel, durch ein Verfahren zum Herstellen eines Flugzeugflügels und durch die Verwendung eines Schweißverfahrens zum Verschweißen eines Flügelholms mit den Merkmalen gemäß den unabhängigen Patentansprüchen gelöst.

Der erfindungsgemäße Flugzeugflügel weist eine Flügelunterdecke, eine Flügeloberdecke und einen Flügelholm auf. Ein erster Endabschnitt des Flügelholms ist mit der Flügelunterdecke verschweißt, und/oder ein zweiter Endabschnitt des Flügelholms ist mit der Flügeloberdecke verschweißt.

Bei dem erfindungsgemäßen Verfahren zum Herstellen eines Flugzeugflügels wird ein erster Endabschnitt eines Flügelholms mit einer Flügelunterdecke verschweißt und/oder wird ein zweiter Endabschnitt des Flügelholms mit einer Flügeloberdecke verschweißt.

Darüber hinaus wird erfindungsgemäß die Verwendung eines Schweißverfahrens zum Verschweißen eines Flügelholms mit einer Flügeloberdecke und/oder mit einer Flügelunterdecke geschaffen.

Somit schafft die Erfindung einen optimierten Schweißabschluss der Verbindung zwischen einem Flügelholm und einer oder beiden Flügeldecken. Diese herstellungstechnische Verbesserung und Vereinfachung wird steigenden Anforderungen bezüglich Leistung und Kosten bei der Herstellung bzw. beim Flugbetrieb zukünftiger Flugzeugstrukturen gerecht. Das erfindungsgemäß geschaffene Fertigungsverfahren für eine Verbindung zwischen Flügelholm und Flügeldecken mittels Schweißens eröffnet neue Möglichkeiten zur Steigerung der Leistungsfähigkeit sowie zur Reduzierung der Kosten und des Gewichts im Verbindungsbereich zwischen Flügelholm und Flügeldecken.

Bei der erfindungsgemäßen Lösung, die hinsichtlich Festigkeit, Gewicht und Fertigungskosten optimiert ist, können Flügelholme aus gefrästen Doppel-T-Profilen gebildet sein. Vier Flansche eines solchen Doppel-T-Profils können durch geeignete Schweißverfahren stumpf mit den Flügeldecken verbunden werden. Das heißt, dass der vordere Flansch des Vorderholms mit dem Vorflügelanschluss, der hintere Flansch des Vorderholms und der vordere Flansch des Hinterholms mit der zentralen Flügeldecke und der hintere Flansch des Hinterholms mit dem Endkasten verbunden werden können.

Der oder die Holme kann oder können aus zwei unterschiedlichen Materialien gebildet sein, welche die dimensionierenden Belastungsarten berücksichtigen. Ein Untergurt und ein benachbarter Stegbereich eines Flügelholms kann aus einer hinsichtlich eines Damage-Tolerance-Verhaltens optimierten Aluminiumlegierung vorgesehen sein, wohingegen für einen Obergurt und einen daran angrenzenden (restlichen) Stegbereich eine Aluminiumlegierung mit hoher statischer Festigkeit Verwendung finden kann. Die beiden Holmteile können durch Schweißen miteinander verbunden werden. Bevorzugt sind Verfahren, die unterschiedliche Legierungen gut miteinander verbinden können, insbesondere Reibrührschweißen (FSW). Es kann auch ein Schmelzschweißverfahren (z.B. Laserstrahlschweißen, LBW) eingesetzt werden.

Durch die Schweißverbindung der Holmflansche mit den Flügeldecken können lebensdauerkritische Vernietungen und Verschraubungen vermieden werden. Dies führt zur Verlängerung der Lebensdauer des Luftfahrzeugs bzw. zu einer signifikanten Erhöhung der zulässigen Entwurfsspannungen und damit zu einer Gewichtseinsparung. Eventuelle Beschädigungen infolge von Materialermüdung, Korrosion oder künstlicher Beschädigung im Verbindungsbereich können durch externe und somit kostengünstige visuelle Kontrollen entdeckt werden.

Die Verwendung von unterschiedlichen Aluminiumlegierungen für die Untergurtbereiche bzw. für die Obergurtbereiche erlaubt eine optimale Werkstoffausnutzung unter Berücksichtigung der lokalen Dimensionierungskriterien.

Zusätzliche Gewichtseinsparungen ergeben sich aus der Entbehrlichkeit von Dopplungen im Schnittstellenbereich zwischen Flügelholm und Flügeldecken, da erfindungsgemäß die Holmgurte als Teil der Flügeldecken (d.h. darin integriert) vorgesehen sein können.

Ein besonderes Einsparpotential stellt die Verwendung eines geeigneten Schweißverfahrens dar. Zum Beispiel kann ein Laserschweißverfahren, ein Reibrührschweißverfahren oder ein Elektronenstrahlschweißverfahren als Ersatz für die bisherigen kostenintensiven Nietungen oder Verschraubungen besonders vorteilhaft zum Einsatz kommen.

Bevorzugte Weiterbildungen in der Erfindung ergeben sich aus den abhängigen Ansprüchen.

Im Weiteren werden Ausgestaltungen des erfindungsgemäßen Flugzeugflügels beschrieben. Diese Ausgestaltungen gelten auch für das Verfahren zum Herstellen eines Flugzeugflügels und für die Verwendung eines Schweißverfahrens zum Verschweißen eines Flügelholms.

Der Flügelholm kann einen im Wesentlichen Doppel-T-förmigen Querschnitt aufweisen oder kann einen im Wesentlichen C-förmigen Querschnitt aufweisen. In beiden Fällen ist durch die senkrecht zu dem Steg verlaufenden Komponenten eine ausreichend große Verbindungsfläche zu einer Flügelunterdecke bzw. zu einer Flügeloberdecke möglich, so dass eine hochfeste und dennoch kostengünstige Schweißverbindung gebildet werden kann.

Der Flugzeugflügel kann ferner (mindestens) einen zusätzlichen Flügelholm aufweisen. Der Flügelholm kann als Vorderholm und der zusätzliche Flügelholm kann als Hinterholm angeordnet sein, wobei der Flügelholm und der zusätzliche Flügelholm (zum Beispiel in Doppel-T-förmiger Konfiguration) jeweils vordere Flansche und hintere Flansche aufweisen können. Die vorderen Flansche des Vorderholms können mit einem Vorflügelanschluss verbunden sein, wobei die hinteren Flansche des Hinterholms mit einem Endkasten verbunden sein können. Die hinteren Flansche des Vorderholms und die vorderen Flansche des Hinterholms können mit einem zentralen Abschnitt der Flügelunterdecke und der Flügeloberdecke verbunden sein.

Der verschweißte erste Endabschnitt des Flügelholms kann einen Teil der Flügelunterdecke bilden. Alternativ oder ergänzend kann der verschweißte zweite Endabschnitt des Flügelholms einen Teil der Flügeloberdecke bilden. Somit kann ein jeweiliger Endabschnitt des Flügelholms in die entsprechende Flügeldecke integriert sein und somit eine besonders stabile Verbindung ausbilden. Dieses ermöglicht ferner eine von außen vornehmbare visuelle Inspektion möglicher Schäden, da der Flügelholm erfindungsgemäß als Teil der Flügelunterdecke bzw. der Flügeloberdecke vorgesehen sein kann.

Der Flügelholm kann einstoffig (d.h. aus einem einzigen Material) ausgebildet sein, wodurch zusätzliche Kostenvorteile erreicht werden.

Alternativ kann der Flügelholm einen ersten Teilbereich aus einem ersten Material und einen zweiten Teilbereich aus einem zweiten Material aufweisen, wobei das erste Material von dem zweiten Material unterschiedlich sein kann. Auf diese Weise kann ein zweistoffiger (oder ein mehrstoffiger) Flügelholm in den Flugzeugflügel eingeschweißt sein, wobei unterschiedliche Bereiche des Holms aus unterschiedlichen Materialen bestehen. Dadurch kann die Materialwahl für unterschiedliche Komponenten funktionsspezifisch, d.h. angepasst auf spezielle Funktionen unterschiedlicher Teilbereiche, vorgenommen werden. So kann zum Beispiel ein Teilbereich hinsichtlich eines Damage-Tolerance-Verhaltens optimiert sein, wohingegen ein anderer Teilbereich für eine Verbindung mit hoher statischer Festigkeit optimiert ist.

Der erste Teilbereich kann einen Untergurt des Flügelholms und einen an den Untergurt angrenzenden Abschnitt eines Stegs des Flügelholms aufweisen. Der zweite Teilbereich kann einen Obergurt des Flügelholms und einen an den Obergurt angrenzenden Abschnitt des Stegs des Flügelholms aufweisen.

Der erste Teilbereich und der zweite Teilbereich können aus zwei unterschiedlichen Aluminiumlegierungen hergestellt sein, die auf die unterschiedlichen Belastungsarten der verschiedenen Holmabschnitte angepasst bzw. optimiert sein können.

Der erste Teilbereich kann mit dem zweiten Teilbereich verschweißt sein. Mit anderen Worten kann eine vorteilhafte Schweißverbindung zur Erhöhung der Stabilität und zur Verringerung der Herstellungskosten auch zum Herstellen einer Schweißverbindung zwischen unterschiedlichen Teilbereichen eines zweistoffigen oder mehrstoffigen (d.h. aus mindestens drei Materialien gebildeten) Holms verwendet werden.

Der erfindungsgemäße Flugzeugflügel kann mindestens einen zusätzlichen Flügelholm aufweisen, wobei ein erster Endabschnitt von jedem des mindestens einen zusätzlichen Flügelholms mit der Flügelunterdecke verschweißt ist und/oder ein zweiter Endabschnitt von jedem des mindestens einen zusätzlichen Flügelholms mit der Flügeloberdecke verschweißt ist. Somit kann die Erfindung auch auf Flugzeugflügel angewendet werden, der mehrere Flügelholme (zum Beispiel zwei oder drei) aufweist.

Ausführungsbeispiele der Erfindung sind in den Figuren dargestellt und werden im Weiteren näher erläutert.

Es zeigen:
Fig. 1 einen Flugzeugflügel gemäß dem Stand der Technik,
Fig. 2 einen Flugzeugflügel gemäß einem ersten Ausführungsbeispiel der Erfindung,
Fig. 3 einen Flugzeugflügel gemäß einem zweiten Ausführungsbeispiel der Erfindung.

Gleiche oder ähnliche Komponenten in unterschiedlichen Figuren sind mit gleichen Bezugsziffern versehen.

Die Darstellungen in den Figuren sind schematisch und nicht maßstäblich.

Im Weiteren wird bezugnehmend auf **Fig. 2** ein Flugzeugflügel 200 gemäß einem ersten Ausführungsbeispiel der Erfindung beschrieben.

Der Flugzeugflügel 200 enthält eine Flügelunterdecke 202, eine Flügeloberdecke 201 und einen Flügelholm 203. Ein unterer Endabschnitt des Flügelholms 203 ist mit der Flügelunterdecke 202 mittels einer Schweißverbindung 208 verschweißt. Ein oberer Endabschnitt des Flügelholms 203 ist mittels einer Schweißverbindung 207 mit der Flügeloberdecke 201 verschweißt.

Der Flügelholm 203 weist einen im Wesentlichen Doppel-T-förmigen Querschnitt auf. Die Verschweißung zwischen dem Flügelholm 203 und den Flügeldecken 201, 202 ist bei dem Ausführungsbeispiel gemäß Fig. 2 derart realisiert, dass der verschweißte untere Endabschnitt des Flügelholms 203 einen Teil der Flügelunterdecke 202 bildet und dass der verschweißte obere Endabschnitt des Flügelholms 203 einen Teil der Flügeloberdecke 201 bildet, so dass der Flügelholm 203 in die Flügeloberdecke 201 bzw. in die Flügelunterdecke 202 integriert ist.

Der Flügelholm 203 weist einen oberen Flügelholmabschnitt 210 und einen unteren Flügelholmabschnitt 211 auf, die aus unterschiedlichen Materialen hergestellt sind. Der untere Flügelholmabschnitt 211 ist aus einer hinsichtlich des Damage-Tolerance-Verhaltens optimierten Aluminiumlegierung gebildet. Der obere Flügelholmabschnitt 210 ist dagegen aus einer Aluminiumlegierung mit hoher statischen Festigkeit gebildet, die auf eine gute mechanische Stabilität hin optimiert ist.

Der obere Flügelholmabschnitt 210 enthält einen Obergurt 204 und einen an den Obergurt 204 angrenzenden Abschnitt eines Mittelstegs 206 des Flügelholms 203. Der untere Flügelholmabschnitt 211 enthält einen Untergurt 205 und einen an den Untergurt 205 angrenzenden Abschnitt des Mittelstegs 206 des Flügelholms 203. Der obere Flügelholmabschnitt 210 ist mit dem unteren Flügelholmabschnitt 211 an einer Verbindungsstelle mittels einer Schweißverbindung 209 verschweißt.

Zur Ausbildung der Schweißverbindungen 207 bis 209 wird gemäß dem beschriebenen Ausführungsbeispiel ein Laserschweißverfahren, Reibrührschweißverfahren, Elektronenstrahlschweißen-Verfahren oder anderes Schweißverfahren verwendet. Zumindest für die Verbindung des oberen und unteren Teils (Schweißnaht 209) ist Reibrührschweißen besonders vorteilhaft, da dieses Verfahren spezielle Qualitäten beim Verschweißen unterschiedlicher Legierungen hat

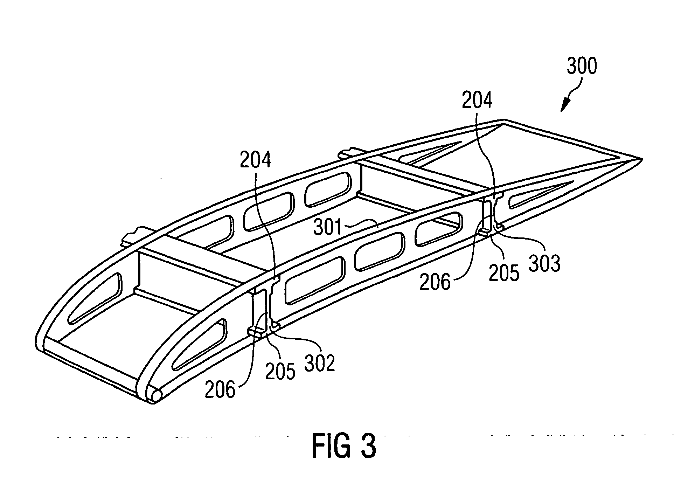

Im Weiteren wird bezugnehmend auf **Fig. 3** ein Flugzeugflügel 300 gemäß einem zweiten Ausführungsbeispiel der Erfindung beschrieben.

Bei dem Flugzeugflügel 300 sind die Flügeloberdecke und die Flügelunterdecke nicht gezeigt, um die Geometrie von zwei Flügelholmen 302 und 303 besser darzustellen.

Der Flugzeugflügel 300 weist einen Vorderholm 302 und einen Hinterholm 303 auf, die an einer Flügelrippe 301 befestigt sind und im Wesentlichen Doppel-T-förmig gebildet sind.

Ausgehend von der in Fig. 3 gezeigten Anordnung wird nachfolgend eine Flügelunterdecke (nicht gezeigt) mit Untergurten 205 der Holme 302, 303 verschweißt und wird eine Flügeloberdecke (nicht gezeigt) mit Obergurten 204 der Flügelholme 302, 303 verschweißt. Bei dem Flugzeugflügel 300 sind somit ein Vorderholm 302 und ein davon separater Hinterholm 303 vorgesehen.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste:

100 Flugzeugflügel
101 Flügeloberdecke
102 Flügelunterdecke
103 Flügelholm
104 Obergurt
105 Untergurt
106 Mittelsteg
107 Schraubverbindung
108 Schraubverbindung
200 Flugzeugflügel
201 Flügeloberdecke
202 Flügelunterdecke
203 Flügelholm
204 Obergurt
205 Untergurt
206 Mittelsteg
207 Schweißverbindung
208 Schweißverbindung
209 Schweißverbindung
210 oberer Flügelholmabschnitt
211 unterer Flügelholmabschnitt
300 Flugzeugflügel
301 Flügelrippe
302 Vorderholm
303 Hinterholm

## Patentansprüche

1. Flugzeugflügel (200), aufweisend
eine Flügelunterdecke (202);
eine Flügeloberdecke (201);
einen Flügelholm (203);
wobei der Flügelholm (203) einen ersten Endabschnitt und einen zweiten Endabschnitt aufweist;
wobei jeder Endabschnitt des Flügelholms (203) einen vorderen und einen hinteren Flansch aufweist;
wobei der erste Endabschnitt des Flügelholms (203) an dem vorderen und an dem hinteren Flansch mit der Flügelunterdecke (202) stumpf verschweißt ist; und
wobei der zweite Endabschnitt des Flügelholms (203) an dem vorderen und an dem hinteren Flansch mit der Flügeloberdecke (201) stumpf verschweißt ist;
wobei der verschweißte erste Endabschnitt des Flügelholms (203) einen Teil der Flügelunterdecke (202) bildet und der verschweißte zweite Endabschnitt des Flügelholms (203) einen Teil der Flügeloberdecke (201) bildet.

2. Flugzeugflügel (200) nach Anspruch 1,
bei dem der Flügelholm (203) einen im Wesentlichen Doppel-T-förmigen Querschnitt aufweist.

3. Flugzeugflügel (200) nach Anspruch 1 oder 2,
der ferner einen zusätzlichen Flügelholm (303) aufweist.

4. Flugzeugflügel (200) nach Anspruch 3,
bei dem der Flügelholm als Vorderholm (302) und bei dem der zusätzliche Flügelholm als Hinterholm (303) angeordnet ist,
wobei der Vorderholm (302) und der Hinterholm (303) jeweils vordere Flansche und hintere Flansche aufweisen,
wobei die vorderen Flansche des Vorderholms (302) mit einem Vorflügelanschluss verbunden sind,
wobei die hinteren Flansche des Hinterholms (303) mit einem Endkasten verbunden sind, und
wobei die hinteren Flansche des Vorderholms (302) und die vorderen Flansche des Hinterholms (303) mit einem zentralen Abschnitt der Flügelunterdecke (202) und der Flügeloberdecke (201) verbunden sind.

5. Flugzeugflügel (200) nach einem der Ansprüche 1 bis 4,
bei dem der Flügelholm (203) einstoffig gebildet ist.

6. Flugzeugflügel (200) nach einem der Ansprüche 1 bis 4,
bei dem der Flügelholm (203) einen ersten Teilbereich (211) aus einem ersten Material und einen zweiten Teilbereich (210) aus einem zweiten Material aufweist, wobei das erste Material von dem zweiten Material unterschiedlich ist.

7. Flugzeugflügel (200) nach Anspruch 6,
bei dem der erste Teilbereich (211) einen Untergurt (205) des Flügelholms (203) und einen an den Untergurt (205) angrenzenden Abschnitt eines Stegs (206) des Flügelholms (203) aufweist; und
bei dem der zweite Teilbereich (210) einen Obergurt (204) des Flügelholms (203) und einen an den Obergurt (204) angrenzenden Abschnitt des Stegs (206) des Flügelholms (203) aufweist.

8. Flugzeugflügel (200) nach Anspruch 6 oder 7,
bei dem der erste Teilbereich (211) und der zweite Teilbereich (210) aus unterschiedlichen Aluminiumlegierungen hergestellt sind.

9. Flugzeugflügel (200) nach einem der Ansprüche 6 bis 8,
bei dem der erste Teilbereich (211) mit dem zweiten Teilbereich (210) verschweißt ist.

10. Flugzeugflügel (200) nach einem der Ansprüche 1 bis 9,
mit mindestens einem zusätzlichen Flügelholm, wobei ein erster Endabschnitt von jedem des mindestens einen zusätzlichen Flügelholms mit der Flügelunterdecke (202) verschweißt ist und/oder ein zweiter Endabschnitt von jedem des mindestens einen zusätzlichen Flügelholms mit der Flügeloberdecke (201) verschweißt ist.

11. Verfahren zum Herstellen eines Flugzeugflügels (200),
bei dem ein erster Endabschnitt eines Flügelholms (203) an einem vorderen und an einem hinteren Flansch des ersten Endabschnitts mit einer Flügelunterdecke (202) stumpf verschweißt wird und ein zweiter Endabschnitt des Flügelholms (203) an einem vorderen und an einem hinteren Flansch des zweiten Endabschnitts mit einer Flügeloberdecke (201) stumpf verschweißt wird;
wobei der verschweißte erste Endabschnitt des Flügelholms (203) einen Teil der Flügelunterdecke (202) bildet und der verschweißte zweite Endabschnitt des Flügelholms (203) einen Teil der Flügeloberdecke (201) bildet.

12. Verwendung eines Schweißverfahrens zum stumpfen Verschweißen eines Flügelholms (203) mit einer Flügeloberdecke (202) und mit einer Flügelunterdecke (201),
wobei ein erster Endabschnitt des Flügelholms (203) an einem vorderen und an einem hinteren Flansch mit der Flügelunterdecke (202) mittels des Schweißverfahrens stumpf verschweißt wird; und
wobei ein zweiter Endabschnitt des Flügelholms (203) an einem vorderen und an einem hinteren Flansch mit der Flügeloberdecke (201) mittels des Schweißverfahrens stumpf verschweißt wird;
wobei der verschweißte erste Endabschnitt des Flügelholms (203) einen Teil der Flügelunterdecke (202) bildet und der verschweißte zweite Endabschnitt des Flügelholms (203) einen Teil der Flügeloberdecke (201) bildet.

13. Verwendung nach Anspruch 12,
bei dem als Schweißverfahren eines aus der Gruppe bestehend aus einem Laserstrahlschweißverfahren, einem Reibrührschweißverfahren und einem Elektronenstrahlschweißverfahren verwendet wird.

## Claims

1. Aircraft wing (200) comprising
a wing lower cover (202);
a wing upper cover (201);
a wing spar (203);
wherein the wing spar (203) comprises a first end portion and a second end portion;
wherein each end portion of the wing spar (203) comprises a front and a rear flange;
wherein the first end portion of the wing spar (203) on the front and on the rear flange is butt welded to the wing lower cover (202); and
wherein the second end portion of the wing spar (203) on the front and on the rear flange is butt welded to the wing upper cover (201);
wherein the welded first end portion of the wing spar (203) forms a part of the wing lower cover (202) and the welded second end portion of the wing spar (203) forms a part of the wing upper cover (201).

2. Aircraft wing (200) according to claim 1, with which the wing spar (203) comprises a substantially double T-shaped cross section.

3. Aircraft wing (200) according to claim 1 or 2 which further comprises an additional wing spar (303).

4. Aircraft wing (200) according to claim 3, with which the wing spar is arranged as a front spar (302) and with which the additional wing spar is arranged as a rear spar (303),
wherein the front spar (302) and the rear spar (303) each comprise front flanges and rear flanges,
wherein the front flanges of the front spar (302) are connected to a slat junction,
wherein the rear flanges of the rear spar (303) are connected to an end box, and
wherein the rear flanges of the front spar (302) and the front flanges of the rear spar (303) are connected to a central portion of the wing lower cover (202) and the wing upper cover (201).

5. Aircraft wing (200) according to any one of claims 1 to 4, with which the wing spar (203) is composed of one type of material.

6. Aircraft wing (200) according to any one of claims 1 to 4, with which the wing spar (203) comprises a first sub-portion (211) of a first material and a second sub-portion (210) of a second material, wherein the first material is different from the second material.

7. Aircraft wing (200) according to claim 6, with which the first sub-portion (211) comprises a bottom chord (205) of the wing spar (203) and a portion of a web (206) of the wing spar (203) adjoining the bottom chord (205) and with which the second sub-portion (210) comprises a top chord (204) of the wing spar (203) and a portion of a web (206) of the wing spar (203) adjoining the top chord (204) of the wing spar (203).

8. Aircraft wing (200) according to claim 6 or 7, with which the first sub-portion (211) and the second sub-portion (210) are made of different aluminium alloys.

9. Aircraft wing (200) according to any one of claims 6 to 8, with which the first sub-portion (211) is welded to the second sub-portion (210).

10. Aircraft wing (200) according to any one of claims 1 to 9 with at least one additional wing spa wherein a first end portion of each of the at least one additional wing spar is welded to wing lower cover (202) and/or a second end portion of each of the at least one additional wing spar is welded to the wing upper cover (201).

11. Method for the production of an aircraft wing (200), with which a first end portion of a wing spar (203) on a front and on a rear flange of the first end portion is butt welded to a wing lower cover (202) and a second end portion of the wing spar (203) on a front and on a rear flange of the second end portion is butt welded to a wing upper cover (201);
wherein the welded first end portion of the wing spar (203) forms a part of the wing lower cover (202) and the welded second end portion of the wing spar (203) forms a part of the wing upper cover (201).

12. Use of a welding process for butt welding a wing spar (203) to a wing upper cover (202) and with a wing lower cover (201), wherein a first end portion of the wing spar (203) on a front and on a rear flange is butt welded to the wing lower cover (202) by means of the welding process; and wherein a second end portion of the wing spar (203) on a front and on a rear flange is butt welded to the wing upper cover (201) by means of the welding process;
wherein the welded first end portion of the wing spar (203) forms a part of the wing lower cover (202) and the welded second end portion of the wing spar (203) forms a part of the wing upper cover (201).

13. Use according to claim 12, with which the welding process used belongs to the group consisting of a laser beam welding process, a friction stir welding process and an electron beam welding process.

## Revendications

1. Aile d'avion (200), comportant
une couverture d'aile inférieure (202);
une couverture d'aile supérieure (201);
un longeron d'aile (203);
dans laquelle le longeron d'aile (203) comporte une première section d'extrémité et une seconde section d'extrémité;
dans laquelle chaque section d'extrémité du longeron d'aile (203) comporte une bride antérieure et une bride postérieure;
dans laquelle la première section d'extrémité du longeron d'aile (203) est soudée bord à bord avec la couverture d'aile inférieure (202), à la bride postérieure et à la bride antérieure; et
dans laquelle la seconde section d'extrémité du longeron d'aile (203) est soudée bord à bord avec la couverture d'aile supérieure (201), à la bride postérieure et à la bride antérieure;
dans laquelle la première section d'extrémité soudée du longeron d'aile (203) constitue une partie de la couverture d'aile inférieure (202) et la seconde section d'extrémité soudée du longeron d'aile (203) constitue une partie de la couverture d'aile supérieure (201).

2. Aile d'avion (200) selon la revendication 1,
dans laquelle le longeron d'aile (203) présente une section transversale essentiellement en forme de double T.

3. Aile d'avion (200) selon l'une quelconque des revendications 1 et 2, comportant en outre un longeron d'aile supplémentaire (203).

4. Aile d'avion (200) selon la revendication 3,
dans laquelle le longeron d'aile est disposé comme longeron antérieur (302) et dans laquelle le longeron d'aile supplémentaire est disposé comme longeron postérieur (303),
dans laquelle le longeron antérieur (302) et le longeron postérieur (303) comportent chacun des brides antérieures et des brides postérieures,
dans laquelle les brides antérieures du longeron antérieur (302) sont reliées à un raccord de bec mobile,
dans laquelle les brides postérieures du longeron postérieur (303) sont reliées à un caisson d'extrémité, et
dans laquelle les brides postérieures du longeron antérieur (302) et les brides antérieures du longeron postérieur (303) sont reliées à une section centrale de la couverture d'aile inférieure (202) et de la couverture d'aile supérieure (201).

5. Aile d'avion (200) selon l'une des revendications 1 à 4,
dans laquelle le longeron d'aile (203) est réalisé en un seul matériau.

6. Aile d'avion (200) selon l'une des revendications 1 à 4,
dans laquelle le longeron d'aile (203) comporte une première zone (211) réalisée en un premier matériau et une seconde zone (210) réalisée en un second matériau, le premier matériau étant différent du second matériau.

7. Aile d'avion (200) selon la revendication 6,
dans laquelle la première zone (211) comporte une ceinture inférieure (205) du longeron d'aile (203) et une section d'un montant (206) du longeron d'aile (203), limitrophe de la ceinture inférieure (205); et
dans laquelle la seconde zone (210) comporte une ceinture supérieure (204) du longeron d'aile (203) et une section d'un montant (206) du longeron d'aile (203), limitrophe de la ceinture supérieure (204).

8. Aile d'avion (200) selon l'une des revendications 6 et 7,
dans laquelle la première section partielle (211) et la seconde zone partielle (210) sont réalisées dans des alliages d'aluminium différents.

9. Aile d'avion (200) selon l'une des revendications 6 à 8,
dans laquelle la première zone (211) est soudée à la seconde zone (210).

10. Aile d'avion (200) selon l'une des revendications 1 à 9,
comportant au moins un longeron d'aile supplémentaire, dans lequel une première section d'extrémité de chacun des au moins un longerons d'ailes supplémentaires est soudée à la couverture d'aile inférieure (202) et/ou une seconde section d'extrémité de chacun des au moins un longerons d'ailes supplémentaires est soudée à la couverture d'aile supérieure (201).

11. Procédé pour fabriquer une aile d'avion (200),
dans lequel on soude bord à bord une première section d'extrémité d'un longeron d'aile (203) avec une couverture d'aile inférieure (202), à une bride postérieure et à une bride antérieure ; et on soude bord à bord une seconde section d'extrémité d'un longeron d'aile (203) avec une couverture d'aile supérieure (201), à une bride postérieure et à une bride antérieure ;
la première section d'extrémité soudée du longeron d'aile (203) constituant une partie de la couverture d'aile inférieure (202) et la seconde section d'extrémité soudée du longeron d'aile (203) constituant une partie de la couverture d'aile supérieure (201).

12. Utilisation d'un procédé de soudage pour souder bord à bord un longeron d'aile (203) à une couverture d'aile supérieure (202) et à une couverture d'aile inférieure (201),
dans laquelle, au moyen du procédé de soudage, on soude bord à bord une première section d'extrémité du longeron d'aile (203) avec la couverture d'aile inférieure (202), à la bride postérieure et à la bride antérieure; et
dans laquelle, au moyen du procédé de soudage, on soude bord à bord une seconde section d'extrémité du longeron d'aile (203) avec la couverture d'aile supérieure (201), à la bride postérieure et à la bride antérieure;
dans laquelle la première section d'extrémité soudée du longeron d'aile (203) constitue une partie de la couverture d'aile inférieure (202) et la seconde section d'extrémité soudée du longeron d'aile (203) constitue une partie de la couverture d'aile supérieure (201).

13. Utilisation selon la revendication 12,
dans laquelle on utilise comme procédé de soudage un procédé issu du groupe comprenant un procédé de soudage au laser, un procédé de soudage par friction et un procédé de soudage par rayon électronique.
